Europäisches Patentamt

European Patent Office

Office européen des brevets

(11) Veröffentlichungsnummer: **0 124 033**
**B1**

(12) # EUROPÄISCHE PATENTSCHRIFT

(45) Veröffentlichungstag der Patentschrift:
29.10.86

(51) Int. Cl.⁴: **C 04 B 35/80**, C 04 B 35/84,
F 16 L 59/00

(21) Anmeldenummer: 84104430.8

(22) Anmeldetag: 18.04.84

(54) **Verfahren zur Herstellung von Faserformkörpern.**

(30) Priorität: 02.05.83 DE 3315880

(43) Veröffentlichungstag der Anmeldung:
07.11.84 Patentblatt 84/45

(45) Bekanntmachung des Hinweises auf die Patenterteilung:
29.10.86 Patentblatt 86/44

(84) Benannte Vertragsstaaten:
DE FR GB IT SE

(56) Entgegenhaltungen:
DE - A - 3 105 596
DE - C - 698 904
FR - A - 824 517
US - A - 3 167 439

CHEMICAL ABSTRACTS, Band 97, Nr. 12, September
1982, Seite 325, Nr. 97269h, Columbus, Ohio, US;
CHEMICAL ABSTRACTS, Band 98, Nr. 6, 7. Februar 1983,
Seite 307, Nr. 39746w, Columbus, Ohio, US;
CHEMICAL ABSTRACTS, Band 83, Nr. 14, 6. Oktober
1975, Seite 380, Nr. 120090q, Columbus, Ohio, US;

(73) Patentinhaber: INTERATOM Gesellschaft mit
beschränkter Haftung, Friedrich-Ebert-Strasse,
D-5060 Bergisch Gladbach 1 (DE)

(72) Erfinder: Reck, Alfred, Dipl.-Ing., Kollenbacher
Strasse 3a, D-5067 Biesfeld (DE)
Erfinder: Wolter, Herbert, Gladbacher Strasse 46,
D-5060 Bergisch-Gladbach (DE)
Erfinder: Jung, Jürgen, Dr. Dipl.-Ing., Barbarastrasse 3,
D-5060 Bergisch-Gladbach (DE)

(74) Vertreter: Mehl, Ernst, Dipl.-Ing. et al, Postfach 22 01 76,
D-8000 München 22 (DE)

**Beschreibung**

Die vorliegende Erfindung betrifft ein Verfahren nach dem Oberbegriff des ersten Anspruchs. Als Wärmedämmaterial für den Einsatz bei hohen Temperaturen (z.B. 1000°C) werden bevorzugt keramische Materialien verwendet, die durch das Brennen einer Suspension von geeigneten mineralischen Fasern (z.B. Aluminiumoxid) in einem Bindemittel hergestellt werden. Derartige Materialien weisen eine gute Formstabilität bei niedriger Dichte, niedrige Wärmeleitfähigkeit und gute Temperaturbeständigkeit sowohl im Dauerbetrieb als auch bei Temperatur-Wechselbelastungen auf. Für besondere Zwecke kann auch ihre Oberflächen-Abriebfestigkeit von Bedeutung sein. Auch Formteile (z.B. Krümmer für die Innenisolierung von Heissgasrohrleitungen) sollen herstellbar sein. Aus der DE-C-698 904 ist ein Verfahren zur Herstellung von Isolierplatten bekannt, bei dem mineralische Faserstoffe, z.B. Schlackenwolle in einem Wasserbad geschlämmt werden. Anschliessend werden z.B. Aluminiumsulfat und Ammoniak zugesetzt; das sich bildende Aluminiumhydroxid wirkt als Bindemittel. Die aus dem Gemisch hergestellten Körper werden dann getrocknet. Sie sind als Isolierplatten im Bauwesen geeignet, nicht jedoch für den oben angesprochenen Dauereinsatz bei hohen Temperaturen bei gleichzeitig erhöhten Anforderungen an die Festigkeit.

Dazu sind in der DE-A-31 05 596 verschiedene Rezepturen für Stoffe vorgeschlagen worden, aus denen gebrannte, verhältnismässig einfache Formteile (etwa in der Form von Ziegelsteinen) hergestellt werden können.

Gegenüber diesem Stand der Technik soll das vorliegende Verfahren die Herstellung komplizierterer Formteile erleichtern und mit nur wenigen Stoffen auskommen.

Die Lösung dieser Aufgabe geschieht gemäss dem kennzeichnenden Teil des ersten Anspruchs dadurch, dass der im Wasser aufgeschlossenen, in bekannter Weise mit frisch gefälltem Aluminiumhydroxid-Gel (als frisch gefällt soll im Sinne dieser Erfindung Aluminiumhydroxid-Gel verstanden werden, das seit seiner Herstellung durch die Einwirkung von löslichen Aluminiumsalzen auf Ammoniumhydroxid bei Raumtemperatur längstens 48 Stunden gelagert wurde) behandelten keramischen Faser zuvor eine Mono-Aluminium-Phosphat-Lösung zugemischt wird. Dieser Zusatz sorgt dafür, dass eine fliessfähige, homogene Suspension der Fasern vorliegt, die in Formen gegossen werden kann. Um dabei den hohen, zur Vereinzelung der Fasern notwendigen Flüssigkeitsüberschuss entfernen zu können, ist die Verwendung sogenannter Siebformen von Vorteil, die z.B. aus einem mit Polytetrafluoräthylen beschichteten und damit praktisch nicht benetzbaren Gewebe bestehen. Die Siebstruktur hält die Fasern zusammen mit dem erforderlichen Bindemittel zurück und lässt den Überschuss abfliessen. Mit derartigen Formen lassen sich auch komplizierter gestaltete Teile herstellen.

Nach dem Giessvorgang wird der Formkörper getrocknet, wobei eine dann auftretende Polymerisierung des Phosphats zu einer gewissen Verfestigung des Formkörpers führt, so dass dieser für den weiteren Herstellungsprozess handhabbar wird. Das mit dem Trockenvorgang einhergehende Schwinden des Formkörpers erleichtert seine Ausformung.

Der anschliessende Brennprozess zum Herstellen einer keramischen Bindung zwischen den Fasern läuft in herkömmlicher Weise ab. Seine Temperatur und Dauer richtet sich nach den Eigenschaften des benutzten Fasermaterials und wird vom Fachmann so vorgenommen, dass die mineralogischen Eigenschaften der Faser nicht wesentlich beeinträchtigt werden.

Um eine höhere Faserdichte im herzustellenden Formkörper zu erreichen, empfiehlt sich die im zweiten Anspruch als Ausgestaltung der Erfindung vorgeschlagene gleichzeitig mit dem Giessvorgang vorzunehmende Vibrationsverdichtung.

Für bestimmte Zwecke kann eine Erhöhung der Dichte des Formkörpers erforderlich sein. Dies kann gemäss der im dritten Anspruch angegebenen Ausgestaltung der Erfindung dadurch geschehen, dass der isotherm z.B. im Mikrowellenofen gestrocknete Grünling im Vakuum mit einer Mono-Aluminium-Lösung und/oder frisch gefälltem Aluminiumhydroxid-Gel und/oder gelösten Aluminiumsalzen imprägniert, isotherm gestrocknet und dann gebrannt wird.

Ist zusätzlich zur Erhöhung der Dichte des Formkörpers über seinen gesamten Querschnitt oder anstelle dessen nur eine Verdichtung seiner Oberfläche gewünscht, kann dies gemäss der im vierten Anspruch angegebenen Ausgestaltung der Erfindung dadurch geschehen, dass das Formteil mit einer Lösung aus Mono-Aluminiumphosphat und/oder frisch gefälltem Aluminiumhydroxid-Gel und/oder gelösten Aluminiumsalzen imprägniert und erst dann, nach anisothermer Trocknung (z.B. normale Ofentrocknung) gebrannt wird. Mit dem beschriebenen Verfahren können aus keramischen Fasern, die 30 oder mehr Prozent Aluminiumoxid enthalten, Formkörper mit einer Dichte von ca. 0,2 bis 0,8 g/m³ hergestellt werden, die bis zu Temperaturen von 1600°C und bei hohen Temperaturänderungsgeschwindigkeiten (z.B. 100 K/min) verwendet werden können. Zum Aufschliesen der Fasern empfiehlt sich ein schonendes Einrühren in entionisiertes Wasser, bis etwaige Faserflocken vereinzelt sind.

**Patentansprüche**

1. Verfahren zur Herstellung von Faserformkörpern aus keramischen Fasern, die Aluminiumoxid enthalten, durch:
   a) Einmischen der Fasern in Wasser,
   c) Zusetzen von frisch gefälltem Aluminiumhydroxid-Gel,
   f) Trocknen,
dadurch gekennzeichnet, dass zusätzlich
   b) eine Mono-Aluminium-Phosphat-Lösung zugemischt
   d) in Siebformen abgegossen und der entstandene Körper
   k) gebrannt wird.
   2. Verfahren nach Anspruch 1, dadurch gekennzeichnet, dass

e) gleichzeitig mit dem Giessvorgang ein Vibrationsverdichten stattfindet.

3. Verfahren nach Anspruch 1 oder 2, dadurch gekennzeichnet, dass der isotherm getrocknete Formkörper

g) mit einer Mischung aus einer Mono-Aluminium-Phosphat-Lösung und/oder frisch gefälltem Aluminiumhydroxid-Gel und/oder gelösten Aluminiumsalzen im Vakuum imprägniert und

h) erneut isotherm getrocknet wird.

4. Verfahren nach Anspruch 1, 2 oder 3, dadurch gekennzeichnet, dass der isotherm getrocknete Formkörper

i) mit einer Mischung aus einer Mono-Aluminium-Phosphat-Lösung und/oder frisch gefälltem Aluminiumhydroxid-Gel und/oder gelösten Aluminiumsalzen imprägniert und anisotherm getrocknet wird.


## Claims

1. A process for the production of fibrous mouldings made of ceramic fibres which contain aluminium oxide, by:

a) mixing the fibres with water,

c) adding freshly precipitated aluminium hydroxide gel,

f) drying,

characterized in that, additionally

b) a mono-aluminium phosphate solution is added,

d) poured into screen moulds, and the moulding k) is fired.

2. A process as claimed in Claim 1, characterised in that

e) consolidation by vibration takes place simultaneously with the pouring operation.

3. A process as claimed in Claim 1 or Claim 2, characterised in that the isothermally-dried moulding

g) is impregnated in vacuum with a mixture consisting of a mono-aluminium phosphate solution and/or freshly precipitated aluminium hydroxide gel and/or dissolved aluminium salts, and

h) isothermally re-dried.

4. A process as claimed in Claim 1, 2 or 3, characterised in that the isothermally dried moulding

i) is impregnated with a mixture consisting of a mono-aluminium phosphate solution and/or freshly precipitated aluminium hydroxide gel and/or dissolved aluminium salts, and

j) anisothermally dried.


## Revendications

1. Procédé de fabrication de corps façonnés fibreux en fibres de céramique, qui contiennent de l'oxyde d'aluminium, par:

a) introduction des fibres dans de l'eau,

c) addition d'un gel d'hydroxyde d'aluminium fraichement précipité,

f) séchage,

caractérisé en ce qu'il consiste en outre

b) à ajouter une solution de phosphate monoaluminique,

d) à verser dans des moules formant tamis et

k) à cuire le corps formé.

2. Procédé suivant la revendication 1, caractérisé en ce que

a) une densification par vibration a lieu en même temps que le processus de coulée.

3. Procédé suivant la revendication 1 ou 2, caractérisé en ce qu'il consiste

g) à imprégner sous vide le corps façonné, séché de manière isotherme, à l'aide d'un mélange constitué d'une solution de phosphate monoaluminique et/ou d'un gel d'hydroxyde d'aluminium fraichement précipité et/ou de sels d'aluminium dissous et

h) à le resécher de manière isotherme.

4. Procédé suivant la revendication 1, 2 ou 3, caractérisé en ce qu'il consiste

i) à imprégner le corps façonné, séché de manière isotherme, à l'aide d'un mélange constitué d'une solution de phosphate monoaluminique et/ou d'un gel d'hydroxyde d'aluminium fraichement précipité et/ou de sels d'aluminium dissous et

j) à le sécher de manière anisotherme.